# EUROPEAN PATENT APPLICATION

(11) **EP 1 683 627 A1**
(43) Date of publication of application: **26.07.2006**
(21) Application number: 05001414.1
(22) Date of filing: 25.01.2005
(51) Int. Cl.: B29C 73/10, B29C 73/32, B64F 5/00

(54) **Method and apparatus for repairing a composite article**

(71) Applicant: SAAB AB, 581 88 Linköping (SE)
(72) Inventor: Westerdahl, Anders, 587 29 Linköping (SE)
(74) Representative: Holmberg, Magnus

(57) **Abstract**

Method for repairing a damaged or defective part (2) of a composite or sheet-like article (1). The method comprises the steps of placing a repair patch (3) over the damaged or defective part of the article, locating a pressure chamber including moulding tool means (7) over at least the damaged or defective part (2) of the article (1) and curing. The method comprises the further step of applying a viscous material (5) in the vicinity of the damaged or defective part (2) of the article (1) before curing and heating the viscous material (5) so that it becomes less viscous and flows into any undesired gaps between the moulding tool means (7) and the article (1).

## Description

### TECHNICAL FIELD OF THE INVENTION AND PRIOR ART

The present invention concerns a method for repairing a damaged or defective part of a composite or sheet-like article, such as an aircraft or spacecraft component, sporting equipment or an electrical/electronic device, and apparatus for use in such a method.

Composite materials are used widely in the automotive, aerospace, civil engineering and other industries where lightweight but structurally strong components are required. Despite their favourable mechanical properties, composite materials often crack if exposed to excessive heat or pressure or when subjected to impact.

US patent application no. 2003/0075259 discloses a method of repairing a composite component having a damaged area. The method includes laying a close-fitting repair patch over the damaged area, locating a pressure chamber over the damaged area, the pressure chamber including a displaceable abutment face, compressing the repair patch between the abutment face of the pressure chamber and the repair patch and elevating the temperature thereof to effect curing of the repair patch.

A disadvantage with such a method is that it is very difficult to achieve a sufficiently good fit between the composite component and the support provided by the abutment face and consequently to obtain a good fit between the repair patch and the composite component. Furthermore the size of the damaged area that can be repaired using such a method is limited by the size of the pressure chamber. Another disadvantage is that it can be difficult to carry out such repair work on site due to the difficulty of transporting pressure chambers such as autoclaves. Since damaged components therefore have to be removed in order for repair work to be carried out, costs and downtime are increased.

US patent no. 6206067 describes a method wherein a concave recess is machined into the damaged area of a large composite structure. A close-fitting repair patch is set into the recess and cured under pressure. Machining a recess to a close fit into a large composite structure is however an expensive and sometimes even an impossible task. Furthermore fibres of a fibre composite may be destroyed by the machining, thus reducing the strength of the composite structure.

### SUMMARY OF THE INVENTION

The object of the present invention is to provide an improved method and apparatus for repairing a surface-damaged or surface-defective part of a composite or a sheet-like article, such as a metallic structure.

This object is fulfilled with a method having the features disclosed in claim 1, namely a method comprising the steps of placing a repair patch over the damaged or defective part of an article, locating a pressure chamber including moulding tool means over at least the damaged or defective part of the article, by vacuum bagging said part for example, so as to apply a pressure to compress the repair patch between an abutment face of the moulding tool means and the article, and curing. The method comprises the step of applying a viscous material in the vicinity of the damaged or defective part of the article and heating the viscous material so that it becomes less viscous and flows into any undesired gaps between the moulding tool means and the article. When the viscous material is heated it becomes less viscous and is forced into areas of lower pressure, i.e. it flows into any undesired gaps between the moulding tool means and the article, thus equalizing the pressure across the surface of the article while the article is subjected to a vacuum/pressure and during the curing process. The surface of the finished article in the area where the repair patch was applied will therefore be even.

The viscous material may be solid at the application temperature and it is then heated to a temperature above its softening point. Alternatively the viscous material may be a viscous liquid at the application temperature which then becomes less viscous on heating. The viscous material is preferably run-resistant during application.

"Curing" is intended to refer to hardening, setting or drying. A material can be cured at room temperature or by heating, by using radiation such as UV-radiation or by any other means well known to persons skilled in the art. If the heat supplied during the curing process (if any) is not sufficient to decrease the viscosity of the viscous material to the desired extent, the viscous material has to be heated separately to the curing step, otherwise the viscous material is heated as the repair patch is cured.

Since no machining of the composite or sheet-like article is required the repair can be carried out quickly and cost effectively without weakening the article's structure. Furthermore special tools for repairing such articles are not required; existing tools, i.e. tools used for the manufacture of the articles, may be used. Furthermore as the viscous material is applied between the article and moulding tool means even large damaged or defective areas which require the article to be supported by a moulding tool can be repaired using the inventive method.

According to another embodiment of the invention the viscous material contains a release agent, such as at least one foil layer placed adjacent to the moulding tool means, to facilitate the removal of excess viscous material so that it does not adhere to the moulding tool. The viscous material is for example applied in the form of a laminate comprising alternating viscous material layers and release-agent layers. However a release agent may not be necessary if the moulding tool means is coated with, or made from, a material to which the viscous material does not adhere.

According to a further embodiment of the invention the viscous material is applied so that a layer of viscous material is adjacent to the repair patch/article. Any scratches or irregularities on the surface of the article are then covered by excess viscous material. The surface of the cured article may then be smoothed (i.e. sanded down for example).

According to an embodiment of the invention the viscous material is a plastic or an adhesive, such as an epoxy or thermoplastic or thermosetting resin, having good adhesion to the composite article. The viscous material may be applied as a solid, liquid, aerosol, powder, gel or a paste.

According to a further embodiment of the invention the method comprises the step of estimating or calculating the amount of viscous material that is required for the repair and applying the required amount. This is done by altering the number and/or thickness of viscous material layers in a laminate for example.

According to an embodiment of the invention the repair patch is pre-cured or co-cured.

The present invention also concerns apparatus for repairing a damaged or defective part of a composite or sheet-like article. The apparatus comprises a repair patch that substantially covers or fills the damaged or defective part of the article and a viscous material such as a plastic or an adhesive, which is placed in the vicinity of the damaged or defective part of the article. On heating the viscous material it becomes less viscous and flows into any undesired gaps between the article and the moulding tool means that are used to cue the article.

According to an embodiment of the invention the viscous material contains a release agent, such as at least one foil layer, to facilitate the removal of the excess viscous material. For example the viscous material constitutes a laminate comprising alternate layers of viscous material and release agent layers.

The method and apparatus according to the present invention are intended for use particularly, but not exclusively for repairing an aircraft or spacecraft component, sporting equipment or an electric/electronic component, such as a circuit board, or any component comprising a composite or sheet-like material.

Further advantages as well as advantageous features of the invention appear from the following description and the other dependent claims.

### BRIEF DESCRIPTION OF THE DRAWINGS

- Fig. 1: shows the a composite or sheet-like article about to be repaired using a method according to an embodiment of the invention, and
- Fig. 2: is a flow chart showing the steps of a method according to an embodiment of the invention.

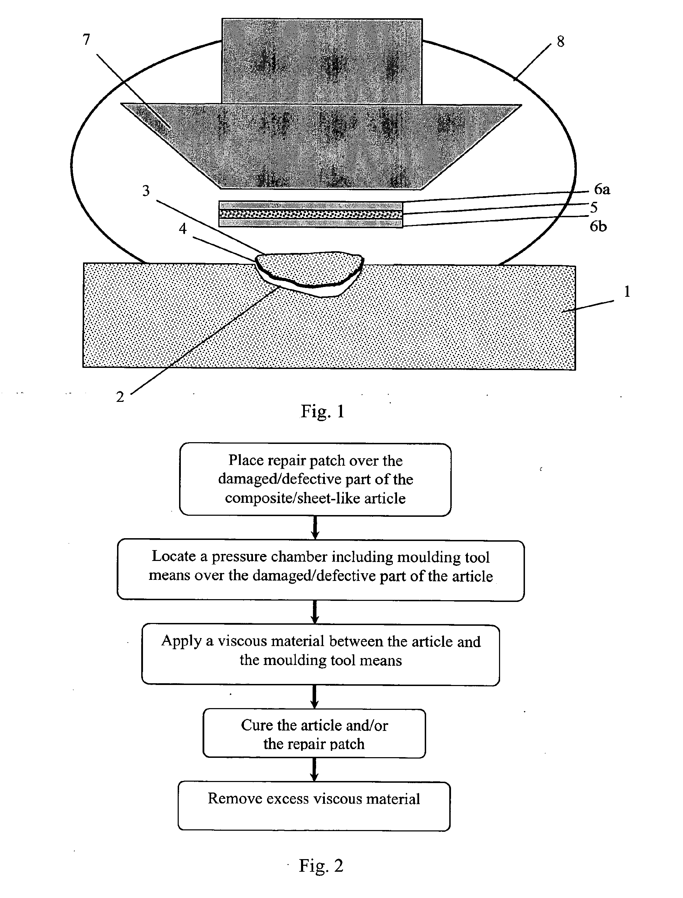

It should be noted that figure 1 is not drawn to scale and that the size of certain features has been exaggerated for the sake of clarity.

The following description and drawings are not intended to limit the present invention to the embodiment disclosed. The embodiment disclosed merely exemplifies the principles of the present invention.

### DETAILED DESCRIPTION OF AN EMBODIMENT OF THE INVENTION

Figure 1 shows a composite or sheet-like article 1 having a damaged area, namely a recess 2 at its surface. The article 1 may for example be part of an aeroplane's wing or fuselage that has been damaged by the high stresses experienced during take-off and landing sequences or damaged as a result of a fabrication defect or the impact of an object. The article 1 may either be removed from the aeroplane for repair or repaired on site. Alternatively, if the article 1 was formed with a surface defect, repair may take during the production of the article.

The recess 2 extends through an outer composite later and into the central core of the composite structure. A repair patch 3 of suitable dimensions, preferably having a perimeter extending beyond the perimeter of the recess 2, and made of a suitable material, preferably of the same material as the article, is placed in alignment with the recess 2. The repair patch 3 and/or the surface of the article 1 to which the repair patch is to be adhered is/are coated with adhesive 4.

A laminate comprising a layer of adhesive 5 sandwiched between two foil layers 6a and 6b is placed on top of the repair patch 3 between the article 1 and a moulding tool 7 that comprises a planar rigid plate that presses against the surface of the article 1. The adhesive 5 is selected to match the physical, chemical, electrical and/or magnetic properties of the article 1 and may therefore comprise a filler such as carbon or glass fibres.

A bagging film or cloth 8 is located around the damaged area 2 to provide a leak-tight seal and a vacuum is applied and maintained therein so as to provide a compressional force on the repair patch 3 and consequently hold it in position while it is cured. During the curing step the adhesive 5 is heated and becomes less viscous. It is forced into areas of lower pressure, namely into any undesired gaps between the moulding tool 7 and the article 1. After curing, excess adhesive 5 is removed. Foil layer 6a prevents adhesive 5 from sticking to the moulding tool 7 and foil layer 6b prevents adhesive 5 from adhering to the surface of the article 1. Curing of the article may also be effected under additional pressure in a pressure chamber.

According to an embodiment of the invention, foil layer 6b may be omitted if it is desired to use the adhesive 5 as a filling compound to fill scratches or cracks on the surface of the article around the recess, for example. Excess adhesive 5 can be sanded off to smooth the surface of the article once the repair work has been completed.

Figure 2 is a flow chart outlining the steps of a method according to an embodiment of the invention. The surface of a composite or sheet-like article is firstly prepared for repair, for example by removing any exterior coating such as paint, and cleaning and roughening the surface to enhance adhesion of a repair patch thereto. A repair patch is placed over or inside the damaged/defective part of the article.

A viscous material is applied in the vicinity of the damaged/defective part between the article and the moulding tool means. The defective/damaged part is vacuum bagged and the repair patch is cured. The heat supplied during the curing process simultaneously heats the viscous material making it less viscous and allowing it to flow into any undesired gaps between the article and the moulding means. After the curing process, excess viscous material removed from the surface of the article and the surface is then smoothed using sand paper for example.

The invention is of course not in any way restricted to the embodiments thereof described above, but many possibilities to modifications thereof would be apparent to a man with ordinary skill in the art without departing from the basic idea of the invention as defined in the appended claims.

## Claims

1. Method for repairing a damaged or defective part (2) of a composite or sheet-like article (1), comprising the steps of placing a repair patch (3) over the damaged or defective part of the article (1), locating a pressure chamber including moulding tool means (7) over at least the damaged or defective part (2) of the article (1) and curing, ***characterized* in that** it comprises the steps of applying a viscous material (5) in the vicinity of the damaged or defective part (2) of the article (1) before curing and heating the viscous material (5) so that it becomes less viscous and flows into any undesired gaps between the moulding tool means (7) and the article (1).

2. Method according to claim 1, ***characterized* in that** the viscous material (5) contains a release agent, such as at least one foil layer (6a, 6b), to facilitate the removal of the excess viscous material (5).

3. Method according to claim 1 or 2, ***characterized* in that** the viscous material (5) is applied in the form of a laminate comprising alternating viscous material layers (5) and release-agent layers (6a, 6b).

4. Method according to claims 2 or 3, ***characterized* in that** the viscous material (5) is applied so that a layer of viscous material is adjacent to the article (1) and the repair patch (3).

5. Method according to claim 4, ***characterized* in that** the surface of the cured article (2) is smoothed to remove excess viscous material (5).

6. Method according to any of the preceding claims, ***characterized* in that** the viscous material (5) is a plastic or an adhesive.

7. Method according to any of the preceding claims, ***characterized* in that** the viscous material (5) is applied as a solid, liquid, aerosol, powder, gel or a paste.

8. Method according to any of the preceding claims, ***characterized* in that** it comprises the step of estimating or calculating the amount of viscous material (5) that is required for the repair and applying the required amount.

9. Method according to any of the preceding claims, ***characterized* in that** the repair patch (3) is pre-cured.

10. Method according to any of claims 1-8, ***characterized* in that** the repair patch (3) is co-cured.

11. Apparatus for repairing a damaged or defective part (2) of a composite or sheet-like article (1) comprising a repair patch (3) that substantially fills or covers the damaged or defective part (2) of the article (1), ***characterized* in that** it also comprises a viscous material (5) that is placed in the vicinity of the damaged or defective part (2) of the article (1), whereby the viscous material (5) becomes less viscous on heating and flows into any undesired gaps between the article (1) and the moulding tool means (7) that are used to cure the article (1).

12. Apparatus according to claim 11, ***characterized* in that** the viscous material (5) contains a release agent, such as at least one foil layer (6a, 6b), to facilitate the removal of the excess viscous material (5).

13. Apparatus according to claim 11 or 12, ***characterized* in that** the viscous material (5) constitutes a laminate comprising alternate layers of viscous material (5) and release agent layers (6a, 6b).

14. Apparatus according to any of claims 11-13, ***characterized* in that** the viscous material (5) is a plastic or an adhesive.

15. Use of a method according to any of claims 1-10 or apparatus according to any of claims 11-14 for repairing an aircraft or spacecraft component, sporting equipment or an electric/electronic component, or any other component comprising a composite or sheet-like material.
